# EUROPEAN PATENT SPECIFICATION

(11) **EP 1 631 454 B1**
(45) Date of publication and mention of the grant of the patent: **14.01.2009**
(21) Application number: 04748598.2
(22) Date of filing: 21.05.2004
(51) Int. Cl.: B32B 27/04, B44C 5/04

(54) **DECORATIVE PANEL FOR OUTDOOR USE AND METHOD FOR MANUFACTURING THE SAME**
SCHMUCKTAFEL FÜR DIE VERWENDUNG IM FREIEN UND VERFAHREN ZU IHRER HERSTELLUNG
PANNEAU DECORATIF POUR UTILISATION EXTERIEURE ET SON PROCEDE DE FABRICATION

(30) Priority: 23.05.2003 NL 1023515
(43) Date of publication of application: 08.03.2006
(73) Proprietor: Trespa International B.V., 6002 SM Weert (NL)
(72) Inventor: RASMUSSON, Gustav, Dennis, NL-6006 NV Weert (NL); HODGSON, Marcelle, NL-5627 LD Eindhoven (NL); VONCKEN, Hendrikus, Hubertus, Gerardus, NL-6181 ES Elsloo (NL)
(74) Representative: Blokland, Arie
(86) International application number: PCT/NL2004/000363
(87) International publication number: WO 2004/103700

(56) References cited:
- DE-A- 3 630 315
- FR-A- 2 532 590
- GB-A- 1 582 473
- US-A- 4 501 635
- US-A- 4 789 604
- US-A- 4 801 495

## Description

The present invention relates to a decorative panel comprising a decorative layer on one or both surfaces of a carrier layer, wherein said decorative layer comprises a substrate layer and a surface layer, the substrate layer being a printed paper and the surface layer being a synthetic resin comprising one or more radiation-curable components, and an adhesion layer is present between the carrier layer and the decorative layer, which adhesion layer is in contact with the substrate layer. In addition to that, the present invention relates to a method for manufacturing a decorative panel.

U.S. patent No. 4,801,495 relates to a decorative panel comprising an underlay, a decorative layer applied to said underlay, and a transparent outermost layer applied to said decorative layer, said outermost layer consisting essentially of the product of radiation-polymerizing a mixture consisting essentially of (i) radiation-polymerizable, aliphatic urethane acrylate oligomer and (ii) a diacrylate or a triacrylate monomer.

GB 1 582 473 relates to a process for producing a decorative laminate comprising the steps of applying a polyester resin to a decorative paper sheet and partially curing said resin; subsequently preparing an assembly or superimposed sheets by placing said decorative paper sheet upon a dry paper sheet, placing a plurality of thermosetting resin impregnated paper sheets beneath said dry sheet and consolidating said assembly under heat and pressure to form a unitary laminated structure, wherein said polyester resin impregnates substantially the entire decorative sheet.

At present there is a need for decorative panels for outdoor use. In addition to a good mechanical stability, panels intended for such use need to have good surface characteristics, such as a good weather resistance and resistance to graffiti. Panels that are used outdoors are exposed to much severer conditions than panels for indoor use, so that different requirements are made of such panels.

Such panels may be used in an environment where they are exposed to scratching, for example in bus shelters and shopping centres, but also in outdoor restaurant furniture. Furthermore it is very important that there is an adequate bond between the carrier layer and the decorative layer, so as to prevent the decorative layer coming off. Since such panels are often used in constructions, a good mechanical stability is required.

In addition to that, the influence of the weather will be great, because the panel will alternately be subjected to wind, rain, snow, hail, radiation from the sun, heat and cold, so that a good weather resistance is required.

At present there are several commercially available panels that exhibit the aforesaid properties to a greater or lesser extent. For example, the commercially available, melamine-based panels exhibit a good mechanical stability and resistance to graffiti. The weather resistance of such panels is insufficient, however. In addition to that there are panels on the market which comprise a thermoplastic foil applied to the aforesaid melamine-based panel. Said protective foil enhances the weather resistance of the panel, but both the mechanical stability and the resistance to graffiti decrease as a result of the presence of such a foil, to the extent that both properties are insufficient. A third type of commercially available panel comprises a melamine-impregnated paper provided with a coating. Said panel exhibits good properties as regards mechanical stability and resistance to graffiti. The weather resistance of said panel, too, is inadequate, and in the case of dark-coloured panels cracks become visible after a certain period of use, which cracks mar the decorative appearance of the panel.

Thus there is a need for decorative panels that exhibit improved properties, viz. a satisfactory balance between mechanical stability, weather resistance and resistance to graffiti.

In practice the mechanical stability is determined by assessing various properties of the panel, such as the scratch resistance and the Z-strength, and by means of the cross-cut adhesion test, for example. The scratch resistance (expressed in N), which indicates the scratch load that can be applied without scratches being formed, is determined in accordance with EN438-2 Section 14. The Z-strength (expressed in N/mm²), which relates to the mutual bond between the various layers and which is represented as the force that must be exerted to separate a layer from another layer, is measured in accordance with DIN 52366. The cross-cut adhesion test in accordance with DIN 53151 is another method of measuring the bond between the layers. To that end, six parallel notches are formed in a layer, after which the panel is turned 90 degrees and six parallel notches are formed again, so that a check pattern is formed. Following that, some loose material is swept off the surface and the degree of damage to the surface and the degree to which the decorative layer has come loose are determined. The results are represented as classes 0 to 5, wherein 0 indicates an excellent bond (smooth notch edges, no material has come loose) and 5 indicates a poor bond, with 65-100% of the material having come loose.

The weather resistance is determined on the basis of, among other things, the exterior colour stability. Said exterior colour stability is usually determined by means of a standard method ISO 4892-2, using an evaluation method in accordance with IS0 150-A2 with a grey scale. The value in question must be as high as possible, it is a measure of the amount of light to which the panel can be exposed without a colour change occurring.

To establish whether a panel is resistant to graffiti, it is determined if the panel is resistant to chemical compounds. Said to resistance to chemical compounds is usually tested by means of a procedure in accordance with EN438-2 Section 15 (Resistance to Staining), viz. the British Standard for Decorative High Pressure Laminate panels. Said testing may involve the use of solvents such as acetone and substances for removing graffiti.

One aspect of the present invention is to provide a decorative panel whose decorative layer exhibits a good mechanical stability as well as a good weather resistance and resistance to graffiti.

Another aspect of the present invention is to provide a method for manufacturing a decorative panel, which method provides a panel that meets the requirements made thereof, and that in a reproducible manner.

In addition to that it is an aspect of the present invention to provide a method for forming a decorative layer.

Another aspect of the present invention is to provide a decorative panel in which the decorative layer is durably bonded to the carrier, so that delamination is minimised.

The present invention as referred to in the introduction is characterized in that a transparent layer is present between the substrate layer and the surface layer, consisting of a synthetic resin comprising radiation-curable components selected from the group of unsaturated (meth)acrylates.

One or more of the above aspects are accomplished by using a layer composition as described above.

The panel furthermore comprises a decorative layer having a good scratch resistance, a good bond, a good resistance to light and good dimensional properties, in particular in conditions as encountered outdoors. The present decorative panel may also be used indoors, of course.

Preferably, the synthetic resin in the surface layer is partially impregnated in the substrate layer, since this enhances the bond between the surface layer and the substrate layer.

In addition to that, the presence of a transparent layer between the substrate layer and the surface layer is desirable, as this provides a better protection of the substrate layer and gives the decorative panel a valuable aura. The transparent layer consists of a synthetic resin comprising radiation-curable components selected from the group of unsaturated (meth)acrylates. In specific embodiments such a transparent layer is different from the surface layer in that the surface layer contains additional additives, such as UV-light absorbents.

The transparent layer may be partially impregnated in the substrate layer, which, also in this case, improves the bond between the layers.

In order to obtain a very good bond between the transparent layer and the surface layer, the transparent layer is preferably mixed with the surface layer at the interface in specific embodiments. The interface is in this connection defined as the area of contact between the two layers.

The adhesion layer preferably comprises one or more base layers, which base layers are impregnated with a resin so as to obtain a properly bonding layer between the decorative layer and the carrier layer.

In addition to that, the resin in the adhesion layer may be partially impregnated in the substrate layer so as to obtain an even better a bond.

A decorative panel according to the invention which stands out in particular as regards its mechanical properties is obtained if the substrate layer is impregnated both with the synthetic resin from the surface layer and with the resin from the adhesion layer. A very suitable resin for the carrier layer is phenol resin, in combination with an adhesion layer impregnated with, preferably, a phenol resin or a melamine resin, which latter resins will penetrate into the substrate layer, into which substrate layer also the synthetic resin of the surface layer has penetrated. When subsequently pressure and heat are applied, the present decorative panel will obtain excellent properties as regards gloss retention, scratch resistance and Z-strength.

Preferably, a thermosetting composite is used for the carrier layer. Said materials exhibit excellent properties as regards mechanical stability, especially dimensional stability, in particular resistance to warping caused by moisture and/or heat, and weather resistance, and consequently they are quite suitable for the present use.

It is desirable for the thermosetting composite to comprise a number of paper layers impregnated with a resin. In this way a thermosetting composite of any desired thickness can be produced by varying the number of layers of paper, the thickness and the amount of resin.

In addition to that it is also possible to use a nonwoven fabric impregnated with a resin as a thermosetting composite. Also densified fibre mats may be considered to be nonwoven fabrics.

In order to obtain an even better bond, the resin in the adhesion layer is preferably mixed with the resin in the carrier layer in the region of the interface as defined above.

Preferably, soda kraft paper is used as the paper layer for the carrier layer, which material is easy to process and exhibits good shape stability.

The following fibres can be mentioned as suitable fibres for use in the nonwoven fabric of the carrier layer: wood fibres, polyester fibres, glass fibres, rock wool fibres, nonwoven fibres, mineral composite fibres or combinations thereof. The use of such materials makes it possible to manufacture a decorative panel comprising any desired carrier layer for any desired purpose. Especially wood fibres have appeared to be a suitable material for the carrier layer, as wood fibres are easy to process and provide a decorative panel that is easy to work, for example saw, drill, sand and the like.

The resins used for the carrier layer and the adhesion layer are preferably selected independently of each other from the group consisting of phenol resins, melamine resins, ureum resins, epoxy resins, polyester resins, polyisocyanate resins, melamine acrylate, polyurethane acrylate or combinations thereof. The use of said resins leads to a strong and rigid resin network, which adds to the qualities of the resulting decorative panel, in which connection especially phenol resins and melamine resins are preferred for reasons of compatibility, crosslinking density of the network and penetration power.

Preferably, a printed paper having a weight of 15-200 g/m², in particular 70-100 g/m², is used. Such paper types not only provide an optimum decorative appearance of the present decorative panel, but also a good penetration power of the resin of the surface layer and/or the transparent layer on the one hand and the resin of the adhesion layer on the other hand. In addition to that, unicolor papers may be used as the printed paper according to the present invention.

The radiation-curable components are preferably selected from the group of unsaturated acrylates and methacrylates. The fact is that such a group of compounds provides rigid networks after polymerisation of said components.

Said components are in particular composed of an oligomer of epoxy and acrylate or silicone and acrylate, preferably an oligomer of polyester and acrylate, and in particular an oligomer of urethane and acrylate or the corresponding oligomers of methacrylate as prepolymers capable of radiation-polymerisation, which have been radiation-polymerized, if appropriate with a mono-, tetra-, penta- and/or hexa-acrylate, preferably a diacrylate or triacrylate for polyols or ether polyols or the corresponding methacrylates.

From a viewpoint of good surface characteristics of the panel, the prepolymer according to the present invention is furthermore preferably an aliphatic oligomer of urethane and acrylate, which has been radiation-polymerised with a diacrylate and/or a triacrylate.

To obtain an optimum stability and gloss it is desirable in a special embodiment for the transparent layer to comprise resins as described in the above paragraphs.

A suitable base layer of the adhesion layer, which provides sufficient stability, impregnation power and workability, may be formed by overlay papers, nonwoven substrates, glass web or combinations thereof, in which connection especially overlay papers having a weight of 10-50 g/m², preferably 15-35 g/m², are used.

By adding one or more additives selected from the group consisting of flame retardants, UV absorbents, light-stabilising substances, pigments, inorganic particles or combinations thereof to one or more layers of the decorative panel according to the present invention, viz. the carrier layer, the adhesion layer, the substrate layer, the transparent layer and the surface layer, the panel can be given the desired properties, such as a particular colour, fire resistance, moisture repellents and a reduced harmful effect of UV light. In particular a nonuniform distribution of the flame retardants over the individual layers, with the highest concentration present in the outer layers, has appeared to be very advantageous.

The decorative layer according to the invention is preferably scratch resistant under a scratch load of at least 1.5 Newton, preferably at least 3 Newton (EN438-2 Section 14). Such a scratch resistance renders the panel suitable for a large variety of applications, in particular in an environment where scratches must be prevented.

An optimum bond between the decorative layer and the carrier layer is very important, in which connection the decorative layer preferably has a Z-strength of 20-50 N/mm², in particular 25-50 N/mm² (DIN 52366).

In addition to that, the decorative layer exhibits an adhesion of maximally class 2 as measured by means of the cross-cut adhesion test (DIN 53151).

Furthermore it is desirable for the decorative layer to have a gloss retention of 80% of the reference sample as measured in accordance with DIN 67530.

In the case of outdoor use, the weather resistance is very important. Consequently it is desirable for the present decorative panel to have an exterior colour stability of at least class 4 (in accordance with the standard testing method IS0 4892-2 and evaluation method ISO 105-A2 with a grey scale).

In addition to that, the present product has been subjected to a test under much severer, artificially created weather conditions. Said additional test is carried out in a closed chamber (Ci4000 Atlas) with a Xenon arch (Xenon lamp of 3500-6500 Watt). Said test comprises the carrying out of Florida simulation cycles of 120 minutes. Said cycles consist of, successively, 90 minutes of light at 50% relative humidity and 30 minutes of light with irrigation. The total duration of the test is 2500 hours. The light intensity is 0.55 W/m² at 340 nm, approx. 63 W/m² (300-400 nm). The temperature of the air is 50 °C. The data obtained in this way, as well as the data obtained by using the standard method, were evaluated on the basis of ISO 105-A2 with a grey scale. The acceptable colour change as measured against a reference sample is a grey scale of at least 4. In addition to that, a visual inspection is made to determine whether any cracks, blisters or delamination occur at the surface.

Other tests that may be used for testing the weather resistance of such panels are the acid resistance, which is determined by measuring the resistance to SO₂ in accordance with DIN 50018. This is a measure of the resistance to acid rain.

In addition to that, the resistance to boiling can be determined by immersing the panel in boiling water for 8 hours, after which the panel is evaluated for visible changes in the gloss and for surface defects, such as blistering on delamination. The latter two aspects indicate a poor bond between the decorative layer and the carrier layer.

The resistance to graffiti is measured as the resistance of the panel to specific chemical compounds. This is measured on the basis of an adapted version of the method according to EN438-2 Section 15 (Resistance to Staining), which is the British standard for Decorative High Pressure Laminate panels. According to said procedure, a number of drops of said chemical compounds are applied to the sample, and subsequently a glass cover plate is provided. After a specific period of contact, the chemical compound is removed and the plate is cleaned. One hour thereafter, the surface is visually inspected for changes in gloss, colour, surface defects and blistering. The changes are indicated, using a scale from 1 to 5, wherein 5 stands for no visible changes and 1 stands for surface defects and blistering. The substances tested include organic solvents, such as acetone, and furthermore specific commercially available substances for removing graffiti.

In a specific embodiment of the present invention, the rear side of the carrier layer, viz. the side remote from the upper side where the adhesion layer and the decorative layer are present, is preferably built up of, successively, kraft paper impregnated with a resin selected from the group consisting of phenol resin, melamine resin, ureum resin, epoxy resin, polyester resin, polyisocyanate resin, melamine acrylate, polyurethane acrylate or combinations thereof, preferably melamine or phenol resins, and a surface layer of a synthetic resin comprising one or more radiation-curable components, as described above, which surface layer forms the outer layer on the bottom side. In another embodiment it is also possible to build up the aforesaid rear side only of a paper layer, which may be coloured, of e.g. 80 g/m², which paper layer abuts against the bottom side, with or without the interposition of an adhesion layer.

In addition to that, the present invention relates to a method for manufacturing a decorative panel comprising a decorative layer on one or both surfaces of a carrier layer, wherein the method comprises the following steps:
i) providing a carrier layer;
ii) applying an adhesion layer to one surface or both surfaces of the carrier layer as obtained in step ii);
iii) applying the decorative layer to one surface or both surfaces of the assembly as obtained in step ii);
iv) processing the assembly as obtained in step iii) under pressure and temperature and residence time conditions such that the decorative panel is obtained, **characterized in that**
   the method for forming a decorative layer comprises the steps of:
v) providing a non-impregnated, printed paper;
viii) providing a transparent layer comprising the synthetic resin comprising one or more radiation-curable components;
vi) applying a surface layer comprising the synthetic resin comprising one or more radiation-curable components to the transparent layer as obtained in step viii);
vii) radiation-curing the assembly as obtained in step vi).
in such a manner that a decorative layer consisting of, successively, partially impregnated, printed paper, a transparent layer and a surface layer is obtained, the surface layer being the outer layer.

There are several methods known in this field of the art for applying the resins of the surface layer and the transparent layer. It is possible, for example, to apply a resin directly to the substrate layer by rotary screen printing; in addition to that, the resin may also be applied to a carrier film (such as a polyester foil or a polypropylene foil) by rotary screen printing, which carrier film is subsequently transferred to the substrate layer. It is also possible to use the two methods simultaneously.

The above methods may be used both for applying a surface layer and for applying a transparent layer as well as a surface layer. Thus it is possible, for example, to apply the transparent layer and the surface layer in succession in one process step, with the transparent layer being directly applied to the substrate layer and the surface layer being applied to the assembly of substrate layer and transparent layer via a carrier foil. Several combinations of the methods as described above are possible, of course. Other methods that may be used are, for example, roller coating, engraving, spray coating, curtain coating, flexographic printing, vacuum coating or ink jet coating and the like.

The present invention will be explained hereinafter by means of a number of examples, in which connection it should be noted, however, that the present invention is by no means limited to such a special embodiments.

### Examples

### Example 1

A surface layer of 90 g/m² of a transparent resin (35% HDDA diluted polyurethane acrylate) was applied to an 80 g/m² paper printed with a decorative wood decor by rotary screen printing. The paper is partially impregnated by the surface layer, and the surface layer is radiation-cured with an electron beam. The pigments in the printed ink are stable under light, said pigments being inorganic, iron oxide-based pigments. A second 25 g/m² paper impregnated with 245% melamine resin was placed between the aforesaid, partially impregnated printed paper and a stack of 30 papers impregnated with a phenol-based resin. This assembly of papers was placed in a press and compressed at a temperature of 160 °C and a pressure of 70 bar for 30 minutes. The properties of the obtained product are shown in Table 1.

### Example 2

The same operations as described in Example 1 were carried out, except that an additional transparent layer of 50 g/m² of a mixture of aliphatic urethanes and metallic effect pigments (aluminium particles) was applied. The use of this layer provides an additional visual effect. The properties of the obtained product are shown in Table 1.

### Example 3

The same operations as described in Example 1 were carried out; in this example the surface layer, which contained nano particles of silicon oxide, was applied in an amount of 30 g/m², and an additional 70 g/m² transparent layer of a polyurethane acrylate was applied. The use of this layer provides an improved scratch resistance. The properties of the obtained product are shown in Table 1.

### Example 4

The same operations as described in Example 1 were carried out; in this example, the 30 papers of Example 1 are substituted for a densified mat of cellulose fibres impregnated with a phenol resin containing a flame retardant. The panel produced in this manner provides improved flame retardation compared to the preceding examples. The properties of the obtained product are shown in Table 1.

### Example 5

The same operations as described in Example 1 were carried out; in this example, a 70 g/m² paper is printed with two layers of ink, with the first layer of ink covering the entire area of the paper. This has an effect on the absorption power of said paper. The properties of the obtained product are shown in Table 1.

### Example 6

The same operations as described in Example 1 were carried out; in this example, the surface coating is applied by means of a forward roll coating method. This method makes it possible to obtain a relatively thin surface layer. The surface layer consists of 20 g/m² polyurethane acrylate. In addition to that an additional 60 g/m² transparent layer of polyester acrylate is applied prior to the application of the surface layer. The properties of the obtained product are shown in Table 1.

**Table 1**

| **Tests carried out** | **Ex. 1** | **Ex. 2** | **Ex. 3** | **Ex. 4** | **Ex. 5** | **Ex. 6** |
|---|---|---|---|---|---|---|
| Weather resistance (grey scale) | 4-5 | 4-5 | 5 | 4-5 | 4-5 | 4 |
| Z-strength (N/mm²) | 27 | 25 | 27 | 27 | 30 | 25 |
| boiling test | n.v.c. * | n.v.c. * | n.v.c. * | n.v.c. * | n.v.c. * | n.v.c. * |
| cross-cut adhesion test (Class) | 1 | 2 | 2 | 2 | 2 | 2 |
| scratch resistance (N) | 4 | 5 | 7 | 4 | 4 | 4 |
| resistance to boiling | v.g.* | v.g.* | v.g.* | v.g.* | v.g.* | v.g.* |
| resistance to S0₂ (grey scale) | 4-5 | 4-5 | 5 | 4-5 | 5 | 4 |
| resistance to chemicals | n.v.c. * | n.v.c. * | n.v.c. * | n.v.c. * | n.v.c. * | n.v.c. * |

| | | | | | | |
|---|---|---|---|---|---|---|
| * n.v.c. : no visible changes * v.g.: very good | | | | | | |

## Claims

1. A decorative panel comprising a decorative layer on one or both surfaces of a carrier layer, wherein said decorative layer comprises a substrate layer and a surface layer, the substrate layer being a printed paper and the surface layer being a synthetic resin comprising one or more radiation-curable components, and an adhesion layer is present between the carrier layer and the decorative layer, which adhesion layer is in contact with the substrate layer **characterized in that** a transparent layer is present between the substrate layer and the surface layer, consisting of a synthetic resin comprising radiation-curable components selected from the group of unsaturated, (meth) acrylates.

2. A decorative panel according to claim 1, **characterized in that** the synthetic resin is partially impregnated in the substrate layer.

3. A decorative panel according to claim 1, **characterized in that** the transparent layer is partially impregnated in the substrate layer.

4. A decorative panel according to any one or more of the claims 1-3, **characterized in that** the transparent layer is mixed with the surface layer in the interface region, i.e. the area of contact between the transparent layer and the surface layer.

5. A decorative panel according to any one or more of the preceding claims, **characterized in that** the adhesion layer comprises one or more base layers, which base layers are impregnated with a resin.

6. A decorative panel according to claim 5, **characterized in that** the resin in the adhesion layer is partially impregnated in the substrate layer.

7. A decorative panel according to any one or more of the preceding claims, **characterized in that** the carrier layer comprises a thermosetting composite.

8. A decorative panel according to claim 7, **characterized in that** the thermosetting composite comprises a number of paper layers, which paper layers are impregnated with a resin.

9. A decorative panel according to claim 7, **characterized in that** the thermosetting composite comprises a nonwoven fabric, which fabric is impregnated with a resin.

10. A decorative panel according to any one or more of the claims 5-9, **characterized in that** the resin in the adhesion layer is mixed with the resin in the carrier layer in the region of the interface, i.e. the area of contact between the adhesion layer and the carrier layer.

11. A decorative panel according to claim 8, **characterized in that** the paper is soda kraft paper.

12. A decorative panel according to claim 9, **characterized in that** the fabric comprises fibres, which fibres have been selected from the group consisting of wood fibres, polyester fibres, glass fibres, rock wool fibres, nonwoven fibres, mineral composite fibres or combinations thereof.

13. A decorative panel according to any one or more of the claims 5-12, **characterized in that** the resin has been selected from the group consisting of phenol resin, melamine resin, ureum resin, epoxy resin, polyester resin, polyisocyanate resin, melamine acrylate, polyurethane acrylate or combinations thereof.

14. A decorative panel according to any one or more of the preceding claims, **characterized in that** the printed paper is a paper having a weight of 15-200 g/m².

15. A decorative panel according to claim 14, **characterized in that** the printed paper is a paper having a weight of 70-100 g/m².

16. A decorative panel according to any one or more of the preceding claims, **characterized in that** the radiation-curable components have been selected from the group of unsaturated acrylates and methacrylates.

17. A decorative panel according to any one or more of the preceding claims, **characterized in that** said radiation-curable components are composed of an oligomer of epoxy and acrylate or silicone and acrylate, preferably an oligomer of polyester and acrylate, and in particular an oligomer of urethane and acrylate or the corresponding oligomers of methacrylate as prepolymers capable of radiation-polymerisation, which prepolymers have been radiation-polymerized, if appropriate with a mono-, tetra-, penta- and/or hexa-acrylate, preferably a diacrylate or triacrylate of polyols or ether polyols or the corresponding methacrylates.

18. A decorative panel according to claim 17, **characterized in that** the prepolymer is an aliphatic polymer of urethane and acrylate, which has been radiation-polymerised with a diacrylate and/or a triacrylate.

19. A decorative panel according to any one or more of the claims 5-18 **characterized in that** the base layer has been selected from the group consisting of overlay papers, nonwoven substrates, glass web or combinations thereof.

20. A decorative panel according to any one or more of the preceding claims, **characterized in that** one or more layers, viz. the carrier layer, the adhesion layer, the substrate layer, the transparent layer and the surface layer comprise one or more additives selected from the group consisting of flame retardants, UV absorbents, light-stabilising substances, pigments, inorganic particles or combinations thereof.

21. A decorative panel according to any one or more of the preceding claims, **characterized in that** the decorative layer is scratch resistant under a scratch load of at least 1.5 Newton (EN438-2 Section 14).

22. A decorative panel according to any one or more of the preceding claims, **characterized in that** the decorative layer is scratch resistant under a scratch load of at least 3.0 Newton (EN438-2 Section 14).

23. A decorative panel according to any one or more of the preceding claims, **characterized in that** the decorative layer has a Z-strength of 20-50 N/mm² (DIN 52366).

24. A decorative panel according to any one or more of the preceding claims, **characterized in that** the decorative layer has a Z-strength of 25-50 N/mm² (DIN 52366).

25. A decorative panel according to any one or more of the preceding claims, **characterized in that** the decorative layer exhibits an adhesion of maximally class 2 as measured by means of the cross-cut adhesion test (DIN 53151).

26. A decorative panel according to any one or more of the preceding claims, **characterized in that** the decorative layer has a gloss retention of at least 80% of a reference sample (DIN 67530).

27. A decorative panel according to any one or more of the preceding claims, **characterized in that** the decorative panel has an exterior colour stability of at least class 4 (standard testing method ISO 4892-2 and evaluation method ISO 105-A2 with a grey scale).

28. A method for manufacturing a decorative panel according to any one or more of the preceding claims, comprising the steps of:
i) providing a carrier layer;
ii) applying an adhesion layer to one surface or both surfaces of the carrier layer as obtained in step i);
iii) applying the decorative layer to one surface or both surfaces of the assembly as obtained in step ii);
iv) subjecting the assembly as obtained in step iii) to pressure and temperature conditions such that the decorative panel is obtained. , **characterized in that** the method further comprises the steps of
v) providing a non-impregnated, printed paper;
viii) providing a transparent layer comprising the synthetic resin comprising one or more radiation-curable components;
vi) applying a surface layer comprising the synthetic resin comprising one or more radiation-curable components to the transparant layer as obtained in step viii) ;
vii) radiation-curing the assembly as obtained in step vi).
in such a manner that a decorative layer consisting of, successively, partially impregnated, printed paper, a transparent layer and a surface layer is obtained.

## Patentansprüche

1. Dekorationsplatte mit einer Dekorationsschicht auf einer oder beiden Oberflächen einer Trägerschicht, wobei die Dekorationsschicht eine Substratschicht und eine Oberflächenschicht umfasst, die Substratschicht ein bedrucktes Papier und die Oberflächenschicht ein Kunstharz aus einer oder mehreren strahlungshärtbaren Komponenten ist und eine Adhäsionsschicht zwischen der Trägerschicht und der Dekorationsschicht angeordnet ist, die Adhäsionsschicht in Kontakt mit der Substratschicht steht, **dadurch gekennzeichnet, dass** eine transparente Schicht sich zwischen der Substrat- und der Oberflächenschicht befindet, und aus einem Kunstharz besteht, das strahlungshärtbare Komponenten, ausgewählt aus der Gruppe ungesättigter (Meth)Acrylate, enthält.

2. Dekorationsplatte nach Anspruch 1, **dadurch gekennzeichnet, dass** das Kunstharz teilweise die Substratschicht durchtränkt.

3. Dekorationsplatte nach Anspruch 1, **dadurch gekennzeichnet, dass** die transparente Schicht teilweise die Substratschicht durchtränkt.

4. Dekorationsplatte nach einem der Ansprüche 1 bis 3, **dadurch gekennzeichnet, dass** die transparente Schicht mit der Oberflächenschicht im Grenzbereich vermischt ist, das ist die Kontaktzone zwischen der transparenten Schicht und der Oberflächenschicht.

5. Dekorationsplatte nach einem oder mehreren der voranstehenden Ansprüche, **dadurch gekennzeichnet, das** die Adhäsionsschicht eine oder mehrere Basisschichten umfasst, die mit einem Harz imprägniert sind.

6. Dekorationsplatte nach Anspruch 5**, dadurch gekennzeichnet, dass** das Harz in der Adhäsionsschicht teilweise die Substratschicht durchtränkt.

7. Dekorationsplatte nach einem oder mehreren der voranstehenden Ansprüche, **dadurch gekennzeichnet, dass** die Trägerschicht einen thermofixierbaren Verbundwerkstoff umfasst.

8. Dekorationsplatte nach Anspruch 7, **dadurch gekennzeichnet, dass** der thermofixierbare Verbundwerkstoff eine Anzahl von mit einem Harz imprägnierten Papierschichten umfasst.

9. Dekorationsplatte nach Anspruch 7, **dadurch gekennzeichnet, dass** der thermofixierbare Verbundwerkstoff aus einem mit Harz imprägniertem Vliesstoffgewebe besteht.

10. Dekorationsplatte nach einem oder mehreren der Ansprüche 5 bis 9, **dadurch gekennzeichnet, dass** das Harz in der Adhäsionsschicht mit dem Harz in der Trägerschicht im Grenzbereich vermischt ist, das ist die Kontaktzone zwischen der Adhäsions- und der Trägerschicht.

11. Dekorationsplatte nach Anspruch 8, **dadurch gekennzeichnet, dass** das Papier ein Natronkraftpapier ist.

12. Dekorationsplatte nach Anspruch 9, **dadurch gekennzeichnet, dass** das Gewebe Fasern umfasst, die aus der Gruppe Holz-, Polyester-, Glas-, Steinwolle-, Vliesstoff-, Mineralverbundfasern oder Kombinationen hiervon, ausgewählt sind.

13. Dekorationsplatte nach einem oder mehreren der Ansprüche 5 bis 12, **dadurch gekennzeichnet, dass** das Harz aus der Gruppe umfassend Phenol-, Melamin-, Harnstoff-, Epoxy-, Polyester-, Polyisocyanatharze, Melaminacrylat, Polyurethanacrylat oder Kombinationen hiervon, ausgewählt ist.

14. Dekorationsplatte nach einem oder mehreren der voranstehenden Ansprüche, **dadurch gekennzeichnet, dass** das bedruckte Papier ein Papier mit einem Gewicht von 15 bis 200 g/m² ist.

15. Dekorationsplatte nach Anspruch 14, **dadurch gekennzeichnet, dass** das bedruckte Papier ein Gewicht von 70 bis 100 g/m² hat.

16. Dekorationsplatte nach einem oder mehreren der voranstehenden Ansprüche, **dadurch gekennzeichnet, dass** die strahlungshärtbaren Komponenten aus der Gruppe der ungesättigten Acrylate und Methacrylate ausgewählt sind.

17. Dekorationsplatte nach einen oder mehreren der voranstehenden Ansprüche, **dadurch gekennzeichnet, dass** die strahlungshärtbaren Komponenten aus einem Oligomer von Epoxy und Acrylat oder Silikon und Acrylat, bevorzugt einem Oligomer aus Polyester und Acrylat und insbesondere einem Oligomer aus Urethan und Acrylat oder den entsprechenden Oligomeren von Methacrylat als Vorpolymerisate, die für eine Strahlungspolymerisation geeignet sind, ausgewählt sind, wobei die Vorpolymerisate passend mit einem Mono-, Tetra-, Penta- und/oder Hexa-Acrylat, bevorzugt mit einem Di- oder Triacrylat von Polyolen oder Etherpolyolen oder den entsprechenden Methacrylaten strahlungspolymerisiert sind.

18. Dekorationsplatte nach Anspruch 17, **dadurch gekennzeichnet, dass** das Vorpolymerisat ein aliphatisches Polymer von Urethan und Acrylat ist, das mit einem Di- und/oder Triacrylat strahlungspolymerisiert ist.

19. Dekorationsplatte nach einem oder mehreren der Ansprüche 5 bis 18, **dadurch gekennzeichnet, dass** die Basisschicht aus der Gruppe umfassend Overlaypapiere, Vliesstoffgewebe, Glasgewebe oder Kombinationen hiervon besteht.

20. Dekorationsplatte nach einem oder mehreren der voranstehenden Ansprüche, **dadurch gekennzeichnet, dass** eine oder mehrere Schichten wie die Träger-, Adhäsions-, Substrat-, transparente Schicht und die Oberflächenschicht ein oder mehrere Additive aus der Gruppe umfassend Flammschutzmittel, UV-Absorber, lichtstabilisierte Substanzen, Pigmente, anorganische Partikel oder Kombinationen hiervon, enthalten.

21. Dekorationsplatte nach einem oder mehreren der voranstehenden Ansprüche, **dadurch gekennzeichnet, dass** die Dekorationsschicht kratzfest bei einer Kratzlast von zumindest 1,5 Newton (gemäß EN 438-2 Section 14) ist.

22. Dekorationsplatte nach einem oder mehreren der voranstehenden Ansprüche, **dadurch gekennzeichnet, dass** die Dekorationsschicht bei einer Kratzlast von zumindest 3,0 Newton (EN 438-2 Section 14) kratzfest ist.

23. Dekorationsplatte nach einem oder mehreren der voranstehenden Ansprüche, **dadurch gekennzeichnet, dass** die Dekorationsschicht eine Z-Stärke von 20 bis 50 N/mm² (DIN 52366) hat.

24. Dekorationsplatte nach einem oder mehreren der voranstehenden Ansprüche, **dadurch gekennzeichnet, dass** die Dekorationsschicht eine Z-Stärke von 25 bis 50 N/mm² (DIN 52366) hat.

25. Dekorationsplatte nach einem oder mehreren der voranstehenden Ansprüche, **dadurch gekennzeichnet, dass** die Dekorationsschicht eine Adhäsion von maximal Klasse 2 aufweist, gemessen mittels des Gitterschnitt-Adhäsionstestes (DIN 53151).

26. Dekorationsplatte nach einem oder mehreren der voranstehenden Ansprüche, **dadurch gekennzeichnet, dass** die Dekorationsschicht eine Glanzbeständigkeit von zumindest 80 % einer Referenzprobe (DIN 67530) hat.

27. Dekorationsplatte nach einem oder mehreren der voranstehenden Ansprüche, **dadurch gekennzeichnet, dass** die Dekorationsschicht eine Außentor-Farbstabilität zumindest der Klasse 4 (Standardprüfmethode ISO 4892-2 und Bewertungsmethode ISO 105-A2 mit einer Grau-Skala) hat.

28. Verfahren zur Herstellung einer Dekorationsplatte gemäß einem oder mehreren der voranstehenden Ansprüche, umfassend die Schritte:
i) Bereitstellen einer Trägerschicht;
ii) Aufbringen einer Adhäsionsschicht auf einer oder beiden Oberflächen der Trägerschicht gemäss Schritt i)
iii) Aufbringen einer Dekorationsschicht auf einer oder beiden Oberflächen der gemäß Schritt ii) erhaltenen Anordnung;
iv) Aussetzen der gemäß Schritt iii) erhaltenen Anordnung Druck- und Temperaturbedingungen derart, dass die Dekorationsplatte erhalten wird,
**dadurch gekennzeichnet, dass** das Verfahren des weiteren die Schritte umfasst:
v) Bereitstellen eines nicht-imprägnierten, bedruckten Papiers;
vi) Bereitstellen einer transparenten Schicht aus einem Kunstharz mit einer oder mehreren strahlungshärtbaren Komponenten;
vii) Aufbringen einer Oberflächenschicht aus einem Kunstharz mit einer oder mehreren strahlungshärtbaren Komponenten auf die transparente Schicht, erhalten gemäß Schritt vi) in einer Weise, dass
viii) durch Strahlung härten der gemäss Schritt vi) erhaltenen Anordnung um eine Dekorationsschicht, aufeinander folgend bestehend aus teilweise imprägniertem, bedrucktem Papier, einer transparenten Schicht und einer Oberflächenschicht, zu erhalten.

## Revendications

1. Panneau décoratif comprenant une couche décorative sur une surface ou les deux surfaces d'une couche porteuse, dans lequel ladite couche décorative comprend une couche de substrat et une couche de surface, la couche de substrat étant un papier imprimé et la couche de surface étant une résine synthétique comprenant un ou plusieurs composants durcissables par rayonnement et une couche d'adhérence est présente entre la couche porteuse et la couche décorative, la couche d'adhérence étant en contact avec la couche de substrat, **caractérisé en ce qu'**une couche transparente est présente entre la couche de substrat et la couche de surface, constitué d'une résine synthétique comprenant des composants durcissables par rayonnement choisis dans le groupe des (méth)acrylates insaturés.

2. Panneau décoratif selon la revendication 1, **caractérisé en ce que** la résine synthétique est partiellement imprégnée dans la couche de substrat.

3. Panneau décoratif selon la revendication 1, **caractérisé en ce que** la couche transparente est partiellement imprégnée dans la couche de substrat.

4. Panneau décoratif selon l'une quelconque ou plusieurs des revendications 1 à 3, **caractérisé en ce que** la couche transparente est mélangée avec la couche de surface dans la région d'interface, c'est-à-dire la zone de contact entre la couche transparente et la couche de surface.

5. Panneau décoratif selon l'une quelconque ou plusieurs des revendications précédentes, **caractérisé en ce que** la couche d'adhérence comprend une ou plusieurs couches de base, les couches de base étant imprégnées d'une résine.

6. Panneau décoratif selon la revendication 5, **caractérisé en ce que** la résine dans la couche d'adhérence est partiellement imprégnée dans la couche de substrat.

7. Panneau décoratif selon l'une quelconque ou plusieurs des revendications précédentes, **caractérisé en ce que** la couche porteuse comprend un composite thermodurcissable.

8. Panneau décoratif selon la revendication 7, **caractérisé en ce que** le composite thermodurcissable comprend un certain nombre de couches de papier, les couches de papier étant imprégnées d'une résine.

9. Panneau décoratif selon la revendication 7, **caractérisé en ce que** le composite thermodurcissable comprend une étoffe non tissée, l'étoffe étant imprégnée d'une résine.

10. Panneau décoratif selon l'une quelconque ou plusieurs des revendications 5 à 9, **caractérisé en ce que** la résine dans la couche d'adhérence est mélangée avec la résine dans la couche porteuse dans la région de l'interface, c'est-à-dire la zone de contact entre la couche d'adhérence et la couche porteuse.

11. Panneau décoratif selon la revendication 8, **caractérisé en ce que** le papier est un papier kraft à la soude.

12. Panneau décoratif selon la revendication 9, **caractérisé en ce que** l'étoffe comprend des fibres, les fibres ayant été sélectionnées dans le groupe constitué par des fibres de bois, des fibres poly(ester), des fibres de verre, des fibres de laine minérale, des fibres non tissées, des fibres composites minérales ou des combinaisons de celles-ci.

13. Panneau décoratif selon l'une quelconque ou plusieurs des revendications 5 à 12, **caractérisé en ce que** la résine a été choisie dans le groupe constitué par une résine phénolique, une résine mélamine, une résine urée, une résine époxy, une résine poly(ester), une résine poly(isocyanate), un acrylate mélamine, un acrylate de poly(uréthane) ou des combinaisons de ceux-ci.

14. Panneau décoratif selon l'une quelconque ou plusieurs des revendications précédentes, **caractérisé en ce que** le papier imprimé est un papier ayant un poids de 15 à 200 g/m².

15. Panneau décoratif selon la revendication 14, **caractérisé en ce que** le papier imprimé est un papier ayant un poids de 70 à 100 g/m².

16. Panneau décoratif selon l'une quelconque ou plusieurs des revendications précédentes, **caractérisé en ce que** les composants durcissables par rayonnement ont été choisis dans le groupe des acrylates et méthacrylates insaturés.

17. Panneau décoratif selon l'une quelconque ou plusieurs des revendications précédentes, **caractérisé en ce que** lesdits composants durcissables par rayonnement sont composés d'un oligomère d'époxy et d'acrylate ou de silicone et d'acrylate, de préférence un oligomère de poly(ester) et d'acrylate et notamment d'un oligomère d'uréthane et d'acrylate ou les oligomères correspondants de méthacrylate en tant que prépolymères capables d'une polymérisation par rayonnement, les prépolymères ayant été polymérisés par rayonnement, le cas échéant avec un mono-, tétra-, penta- et/ou hexa-acrylate, de préférence un diacrylate ou triacrylate de polyols ou de polyols éther ou les méthacrylates correspondants.

18. Panneau décoratif selon la revendication 17, **caractérisé en ce que** le prépolymère est un polymère aliphatique d'uréthane et d'acrylate, qui a été polymérisé par rayonnement avec un diacrylate et/ou un triacrylate.

19. Panneau décoratif selon l'une quelconque ou plusieurs des revendications 5 à 18, **caractérisé en ce que** la couche de base a été choisie dans le groupe constitué par les papiers overlay, les substrats non tissés, la toile de verre ou des combinaisons de ceux-ci.

20. Panneau décoratif selon l'une quelconque ou plusieurs des revendications précédentes, **caractérisé en ce qu'**une ou plusieurs couches, à savoir la couche porteuse, la couche d'adhérence, la couche de substrat, la couche transparente et la couche de surface comprennent un ou plusieurs additifs choisis dans le groupe constitué par les ignifuges, les absorbeurs d'UV, les substances photostabilisantes, les pigments, les particules inorganiques ou des combinaisons de ceux-ci.

21. Panneau décoratif selon l'une quelconque ou plusieurs des revendications précédentes, **caractérisé en ce que** la couche décorative résiste à la rayure sous une charge de rayure d'au moins 1,5 Newton (EN438-2 section 14).

22. Panneau décoratif selon l'une quelconque ou plusieurs des revendications précédentes, **caractérisé en ce que** la couche décorative résiste à la rayure sous une charge de rayure d'au moins 3,0 Newton (EN438-2 section 14).

23. Panneau décoratif selon l'une quelconque ou plusieurs des revendications précédentes, **caractérisé en ce que** la couche décorative a une résistance Z de 20 à 50 N/mm² (DIN 52366).

24. Panneau décoratif selon l'une quelconque ou plusieurs des revendications précédentes, **caractérisé en ce que** la couche décorative a une résistance Z de 25 à 50 N/mm² (DIN 52366).

25. Panneau décoratif selon l'une quelconque ou plusieurs des revendications précédentes, **caractérisé en ce que** la couche décorative présente une adhérence de catégorie 2 maximale telle que mesurée au moyen de l'essai de collage en coupe transversale (DIN 53151).

26. Panneau décoratif selon l'une quelconque ou plusieurs des revendications précédentes, **caractérisé en ce que** la couche décorative présente une rétention de brillance d'au moins 80 % d'un échantillon de référence (DIN 67530).

27. Panneau décoratif selon l'une quelconque ou plusieurs des revendications précédentes, **caractérisé en ce que** le panneau décoratif présente une stabilité de couleur extérieure au moins de catégorie 4 (procédé de mise à l'essai standard ISO 4892-2 et procédé d'évaluation ISO 105-A2 avec une échelle de gris).

28. Procédé de fabrication d'un panneau décoratif selon l'une quelconque ou plusieurs des revendications précédentes, comprenant les étapes consistant à :
i) fournir une couche porteuse ;
ii) appliquer une couche d'adhérence à une surface ou aux deux surfaces de la couche porteuse telle qu'obtenue à l'étape i) ;
iii) appliquer la couche décorative à une surface ou aux deux surfaces de l'ensemble tel qu'obtenu à l'étape ii) ;
iv) soumettre l'ensemble tel qu'obtenu à l'étape iii) à des conditions de pression et de température telles que le panneau décoratif est obtenu ;
**caractérisé en ce que** le procédé comprend en outre les étapes consistant à :
v) fournir un papier imprimé non imprégné ;
vi) fournir une couche transparente comprenant la résine synthétique comprenant un ou plusieurs composants durcissables par rayonnement ;
vii) appliquer une couche de surface comprenant la résine synthétique comprenant un ou plusieurs composants durcissables par rayonnement à la couche transparente telle qu'obtenue à l'étape vi);
viii) durcir par rayonnement l'ensemble tel qu'obtenu à l'étape vi) ;
de telle sorte qu'une couche décorative constituée, successivement, de papier imprimé partiellement imprégné, d'une couche transparente et d'une couche de surface soit obtenue
